Europäisches Patentamt

European Patent Office

Office européen des brevets

(19)

(11) Numéro de publication: **0 205 898 B1**

(12) **FASCICULE DE BREVET EUROPEEN**

(45) Date de publication du fascicule du brevet:
**10.05.89**

(51) Int. Cl.⁴: **F16L 23/02**

(21) Numéro de dépôt: **86106613.2**

(22) Date de dépôt: **15.05.86**

(54) **Raccord télémanipulable entre deux brides de tuyaux.**

(30) Priorité: **20.05.85 LU 85903**

(43) Date de publication de la demande:
**30.12.86 Bulletin 86/52**

(45) Mention de la délivrance du brevet:
**10.05.89 Bulletin 89/19**

(84) Etats contractants désignés:
**BE DE FR GB IT LU NL**

(56) Documents cités:
**DE-A- 1 600 403**
**US-A- 3 165 341**
**US-A- 4 183 189**

(73) Titulaire: **COMMUNAUTE EUROPEENNE DE L'ENERGIE ATOMIQUE (EURATOM), Bâtiment Jean Monnet Plateau du Kirchberg Boîte Postale 1907,
L-1019 Luxembourg(LU)**

(72) Inventeur: **Rochez, René, Via Papa Giovanni 5,
I-21020 Brebbia(IT)**

(74) Mandataire: **Weinmiller, Jürgen,
Lennéstrasse 9 Postfach 24, D-8133 Feldafing(DE)**

ACTORUM AG

## Description

L'invention se réfère à un raccord télémanipulable entre und bride fixe d'un tuyau et une bride mobile d'un autre tuyau, comportant des clames qui sont chacune montées par une vis télémanipulable sur une couronne extérieure de la bride mobile et s'engagent sur une face arrière de la bride fixe, les clames étant montées sur la bride de façon rotative autour de l'axe de la vis correspondante, au moins une butée délimitant le mouvement rotatif de la clame à une valeur de 90° entre une position "raccord fermé" et une position "raccord ouvert". Un tel raccord est connu, par exemple à partir du document US-A 4 183 189.

Un raccord entre deux brides de tuyaux à l'aide d'un grand nombre de vis qui traversent des trous alignés des deux brides et des écrous ne se prête pas à une télémanipulation, car il faut d'abord positionner angulairement les deux brides pour pouvoir enfiler les vis, et puis il faut engager des écrous dans le filetage des vis, ce qui est délicat, car on risque de perdre vis ou écrou.

Un système à clames tel que celui du document cité se prête mieux à une télémanipulation, car le raccord peut se faire dans n'importe quelle position angulaire et les clames avec leurs vis de serrage peuvent être associées de façon imperdable à l'une des deux brides.

Cependant, il est nécessaire dans ce cas de prévoir des mécanismes compliqués pour que les clames restent dans une position déterminée avant leur engagement avec le tuyau fixe. Une seule clame en position irrégulière parmi les multiples clames présentes peut mettre en cause le positionnement correct des deux faces d'étanchéité des deux brides.

Un autre inconvénient d'un tel raccord se manifeste lors d'un grippage du filet d'une des vis, qui rend le dévissage impossible. Cet accident demande habituellement la découpe de la vis. Une partie de la vis reste donc prisonnière dans le filet de la bride mobile, ce qui nécessite une réparation coûteuse.

L'invention a pour but de remédier aux inconvénients cités ci-dessus et de proposer un raccord télémanipulable tel que spécifié ci-dessus, qui permet de conférer aux clames une position déterminée lors de l'établissement du raccord et qui évite le découpage d'une vis en grippage.

Ce but est atteint selon l'invention par un raccord télémanipulable entre un bride fixe d'un tuyau et une bride mobile d'un autre tuyau, comportant des clames qui sont chacune montées par une vis télémanipulable sur une couronne extérieure de la bride mobile et s'engagent sur une face arrière de la bride fixe, les clames étant montées sur la bride de façon rotative autour de l'axe de la vis correspondante, au moins une butée délimitant le mouvement rotatif de la clame à une valeur de 90° entre une position "raccord fermé" et une position "raccord ouvert", caractérisé en ce qu'un moyen de couplage rotatif à friction est prévu entre chaque vis et sa clame et que les vis s'engagent dans des trous taraudés de la bride mobile.

De préférence, le moyen de couplage est constitué d'un ressort hélicoïdal monté dans un logement de la bride mobile coaxialement à l'axe de la vis correspondante, une extrémité de ce ressort étant couplé en rotation à la vis, et l'autre étant appliqué à friction contre une surface de la clame, cette surface étant de révolution autour de l'axe de la vis.

Alternativement, le ressort peut être couplé en rotation à la clame par une extrémité et être appliqué à friction contre une surface de la vis.

Cette surface de révolution, sur laquelle est appliquée une extrémité du ressort, peut être disposée soit orthogonalement à l'axe de la vis, soit être constituée par une surface cylindrique autour de cet axe.

A titre d'alternative, le moyen de couplage peut être constitué également par un joint torique mou disposé dans une gorge torique de la vis et en contact frottant avec une gorge torique de la clame, les deux gorges se faisant face l'une à l'autre.

L'invention sera décrite ci-après plus en détail à l'aide de deux exemples de réalisation et des dessins.

Fig. 1 représente en coupe axiale une première variante d'un raccord télémanipulable selon l'invention.

Fig. 2 montre une autre variante de ce raccord.

Fig. 3 représente une vue de dessus sur le raccord selon la fig. 1.

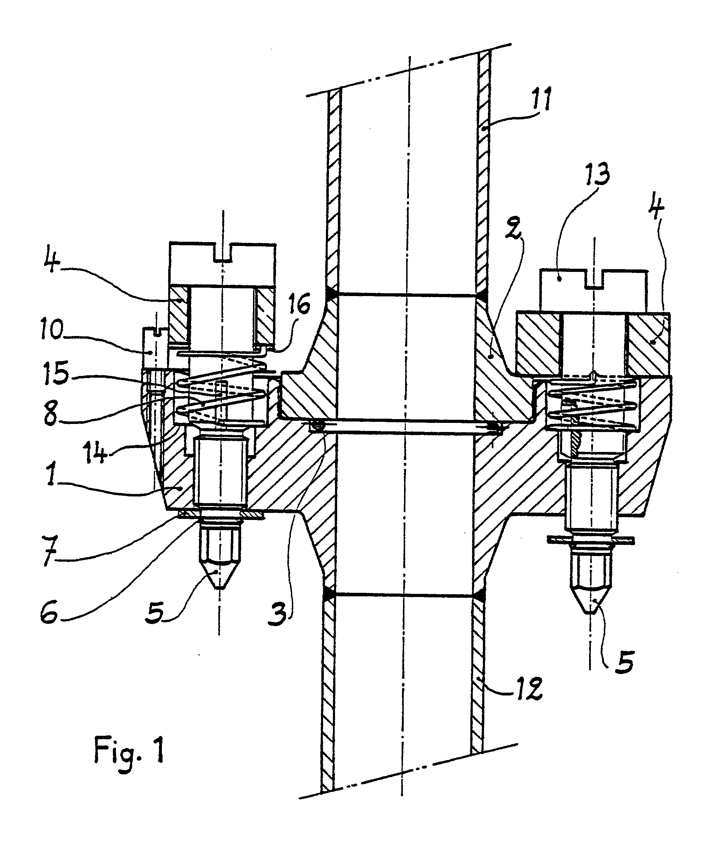

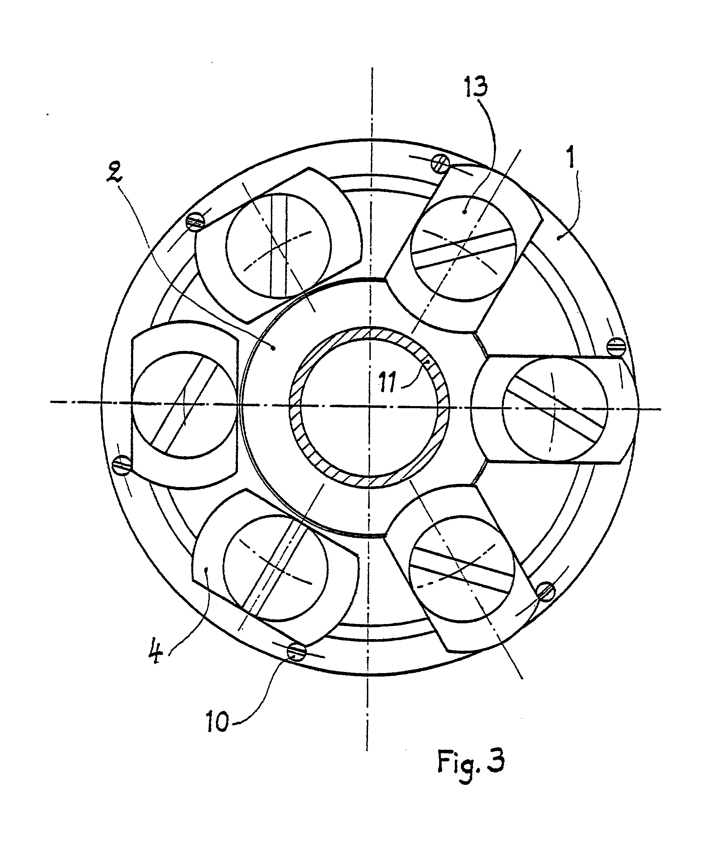

Le raccord qui est représenté sur les figures 1 et 3, entre un tuyau fixe 11 et un tuyau mobile 12 consiste principalement en une bride 1 soudée au tuyau mobile, une bride 2 soudée au tuyau fixe 11 et en six clames 4 enfilées chacune sur une vis 5. Les vis sont engagées dans des trous taraudés de la bride 1 et sont rendues imperdables par un circlip 6 et une rondelle 7. Un télémanipulateur non représenté peut être engagé soit sur la tête 13 de la vis 5, soit sur l'extrémité opposée à cette tête, qui peut à ces fins présenter une forme hexagonale.

Les axes des vis sont parallèles à l'axe commun des deux tuyaux à raccorder et répartis régulièrement sur une couronne extérieure de la bride 1.

Les clames ont une forme allongée et peuvent être disposées soit en position dite ouverte telle que représentée dans la partie gauche de la fig. 1 ou en position dite fermée telle que représentée dans la partie droite de cette figure.

Ces positions extrêmes sont définies par une butée 10 solidaire de la bride 1 et en contact dans chacune des positions extrêmes avec la clame.

Un ressort 8 est disposé autour de chaque vis 5 dans une zone intermédiaire entre le filetage et la tête 13. Il s'appuie sur un épaulement 14 du trou de passage de la vis à travers la bride 1. L'extrémité inférieure de ce ressort est engagée dans une rainure 15, qui est coupée parallèlement à l'axe dans le corps de la vis 5 et permet un accouplement entre ce ressort 8 et la vis 5 pour un mouvement rotatif tout en admettant un glissement axial de l'extrémité du ressort 8 dans cette rainure.

L'extrémité supérieure de ce ressort 8 se place à friction sur une surface de friction de la clame 4, cette surface étant perpendiculaire à l'axe de la vis correspondante. La surface est munie d'un grand nombre de rainures radiales 16 augmentant ainsi le taux de friction.

Le fonctionnement du raccord télémanipulable selon les fig. 1 et 3 est le suivant:

Avant le rapprochement de la bride mobile 1 à la bride fixe, on arrange toutes les clames dans la position telle que représentée sur la partie gauche de la fig. 1, c'est-à-dire avec la rondelle 7 appliquée contre la face arrière de la bride 1 et la clame 4 en position tangentielle par rapport à la bride 2. Cette position des clames est stable, car le ressort 8 s'oppose à une rotation aléatoire de la clame. On peut ainsi rapprocher mutuellement les deux brides jusqu'à ce que leurs faces frontales viennent en contact l'une avec l'autre et qu'un joint d'étanchéité 3 intermédiaire soit légèrement écrasé. Une position angulaire particulière n'est pas nécessaire, et l'alignement axial des deux brides est obtenu de façon classique par un encastrement de la bride 2 dans la bride mobile.

Puis, on tourne par un télémanipulateur les vis 5. Au premier quart de tour, les clames 4 sont tournées avec, jusqu'à ce qu'elles arrivent à nouveau en contact avec la butée 10. En continuant de serrer la vis 5, le ressort glisse sur la surface rainurée 16 en se comprimant progressivement. En fin de course, la clame 4 est serrée contre la surface arrière de la bride 2 et le raccord est établi.

Pour déconnecter le raccord, on applique de nouveau un télémanipulateur sur les différentes vis. Dès le début de la rotation de la vis, la clame 4 est amenée en rotation d'un quart de tour et dégage ainsi complètement la bride fixe 2. Il n'est donc pas nécessaire d'amener la vis 5 jusqu'à la position représentée sur la partie gauche de la fig. 1 avant que le raccord soit dégagé.

Il peut arriver que, dû à un traitement thermique ou d'irradiation lors de l'opération du raccord, un filetage d'une des vis soit grippée et s'oppose à un dévissage. Il n'est alors pas nécessaire, comme dans la technique antérieure, de découper la tête 13 de la vis en question pour pouvoir dégager le raccord, mais il suffit simplement d'enlever la butée 10 de cette vis et d'appliquer une clef adéquate sur la clame correspondante. En exerçant un couple adéquat à cette clef, on peut tourner la clame d'un quart de tour et ainsi libérer la bride 2 sans rotation de la vis en grippage. On peut alors amener la bride mobile 1 en atelier, où des moyens appropriés pour le dégrippage sont à disposition.

Lorsque le télémanipulateur s'engage en opération normale sur la tête inférieure hexagonale de la vis 5, il est mieux de prévoir un filetage à pas gauche pour réduire les risques de se tromper dans le sens de serrage.

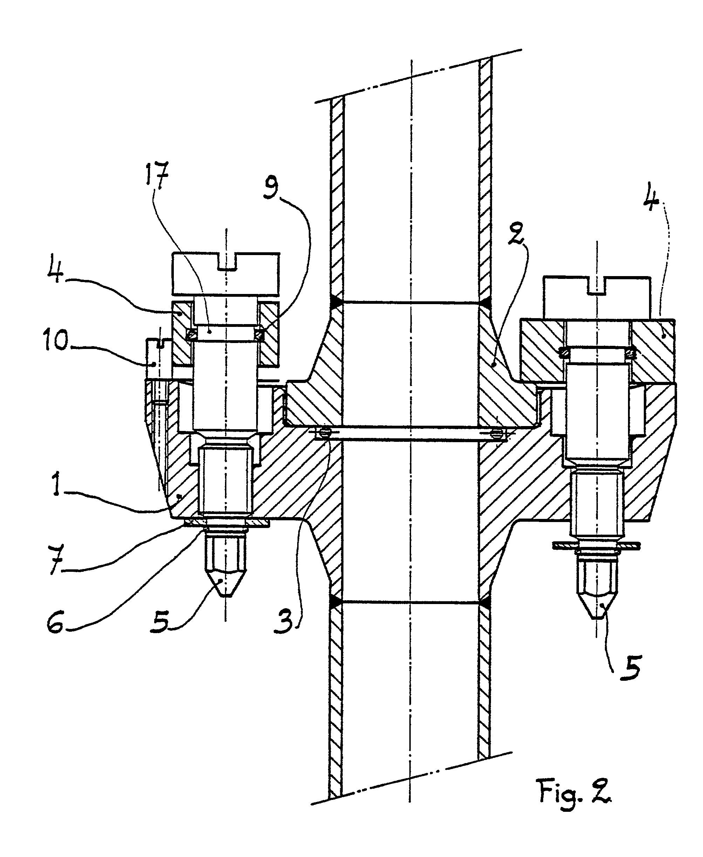

La variante selon la fig. 2 se distingue de la variante précédente par le fait que le ressort 8 est remplacé par un joint torique 9, qui est logé dans une gorge 17 de la vis 5 et qui est en contact frottant avec une gorge torique de la clame 4, les deux gorges se faisant face l'une à l'autre. Le joint 9 est par exemple en caoutchouc, et la clame 4 est enfilée à force sur ce joint lors de l'assemblage du raccord.

Ce joint torique mou 17 a la même fonction que le ressort 8 selon la fig. 1. Il sert à coupler à friction la vis 5 et la clame 4 et il sert en outre à maintenir la clame à distance de la bride 2 lorsque la rondelle 7 est en contact avec la bride 1.

A part le remplacement du ressort 8 par le joint 9, le raccord selon la fig. 2 correspond fidèlement au raccord selon la fig. 1, ce qui permet de désigner les autres composants par les mêmes chiffres de référence que selon la fig. 1.

L'invention n'est pas limitée aux variantes décrites et mentionnées ci-dessus. Ainsi, on peut prévoir plus au moins que six vis et six clames selon les besoins pratiques existants. En outre, on peut remplacer la butée unique 10 par deux butées qui sont spécifiques pour la position "ouverte" et la position "fermée" respectivement.

Grâce au couplage à friction entre la vis 5 et sa clame 4, on est sûr que la clame ne se déplace pas aléatoirement, c'est-à-dire sans qu'on ait volontairement tourné la vis 5 en question.

## Revendications

1. Raccord télémanipulable entre une bride fixe d'un tuyau et une bride mobile d'un autre tuyau, comportant des clames qui sont chacune montées par une vis télémanipulable sur une couronne extérieure de la bride mobile et s'engagent sur une face arrière de la bride fixe, les clames étant montées sur la bride de façon rotative autour de l'axe de la vis correspondante, au moins une butée délimitant le mouvement rotatif de la clame à une valeur de 90° entre une position "raccord fermé" et une position "raccord ouvert", caractérisé en ce qu'un moyen de couplage rotatif à friction (8; 9) est prévu entre chaque vis (5) et sa clame (4), et que les vis (5) s'engagent dans des trous taraudés de la bride mobile (1).

2. Raccord selon la revendication 1, caractérisé en ce que ledit moyen de couplage est constitué d'un ressort hélicoïdal (8) monté dans un logement de la bride mobile (1) coaxialement à l'axe de la vis (5) correspondante, une extrémité de ce ressort étant couplée en rotation à la vis et l'autre étant appliquée à friction contre une surface de la clame, cette surface étant de révolution autour de l'axe de la vis (5).

3. Raccord selon la revendication 2, caractérisé en ce que ladite surface de révolution est disposée orthogonalement à l'axe de la vis (5) et est munie de rainures radiales (16), sur lesquelles l'extrémité correspondante du ressort (8) frotte lors d'un mouvement relatif entre la vis (5) et la clame (4).

4. Raccord selon la revendication 1, caractérisé en ce que ledit moyen de couplage est un joint torique mou (9) disposé dans une gorge torique (17) de la vis et en contact frottant avec une gorge torique de la clame (4), les deux gorges se faisant face l'une à l'autre (fig. 2).

5. Raccord selon une des revendications 1 à 4, caractérisé en ce que les butées sont amovibles.

## Patentansprüche

1. Fernbetätigte Verbindung zwischen einem festen Flansch eines Rohres und einem losen Flansch eines anderen Rohres, ausgestattet mit Klemmstücken, die je mit Hilfe einer fernbetätigbaren Schraube auf einer äußeren Kronfläche des losen Flansches montiert werden und sich an einer hinteren Fläche des festen Flansches anlegen, wobei die Klemmstücke auf dem Flansch drehbar um die Achse der entsprechenden Schraube angeordnet sind und mindestens ein Anschlag die Drehbewegung des Klemmstücks auf 90° zwischen einer Position "Verbindung geschlossen" und einer Position "Verbindung gelöst" begrenzt, dadurch gekennzeichnet, daß ein mit Reibung arbeitendes drehbares Kopplungsmittel (8, 9) zwischen jeder Schraube (5) und ihrem Klemmstück (4) vorgesehen ist, und daß die Schrauben (5) in mit Gewinde versehenen Löchern des losen Flansches stecken.

2. Verbindung nach Anspruch 1, dadurch gekennzeichnet, daß das Kopplungsmittel aus einer Schraubenfeder (8) besteht, welche in einer Ausnehmung des losen Flansches (1) koaxial um die Achse der entsprechenden Schraube (5) montiert ist, wobei ein Ende dieser Feder drehbeweglich mit der Schraube gekoppelt ist und das andere Ende reibend gegen eine Fläche des Klemmstücks anliegt, und diese Fläche rotationssymmetrisch um die Achse der Schraube (5) verläuft.

3. Verbindung nach Anspruch 2, dadurch ge-kennzeichnet, daß die rotationssymmetrische Flä-che senkrecht zur Achse der Schraube (5) liegt und mit radialen Nuten (16) versehen ist, über die das entsprechende Ende der Feder (8) während einer Relativbewegung zwischen der Schraube (5) und dem Klemmstück (4) reibend gleitet.

4. Verbindung nach Anspruch 1, dadurch gekennzeichnet, daß das Kopplungsmittel eine weiche Torusdichtung (9) ist, welche in einer Ringkehle (17) der Schraube angebracht ist und in Reibkontakt mit einer Ringkehle des Klemmstücks (4) steht, wobei die beiden Ringkehlen einander gegenüberstehen (Fig. 2).

5. Verbindung nach einem der Ansprüche 1 bis 4, dadurch gekennzeichnet, daß die Anschläge abnehmbar sind.

## Claims

1. A remotely actuated connection between a stationary flange of a pipe and a mobile flange of another pipe, comprising clamping claws each being fitted upon an outer crest of the mobile flange by a remotely actuated screw and bearing against a rear surface of the stationary flange, with the clamping claws being rotatively mounted on the flange around the axis of the screw, while at least one stop delimits the rotative movement of the clamping claw within the limits of 90° between a position referred to as "closed position" and a position referred to as "release position", characterized in that a rotative frictional coupling means (8, 9) is provided between each screw (5) and its clamping claw (4), and that the screws (5) are engaged in the threaded bores of the mobile flange.

2. A connection according to claim 1, characterized in that the coupling means is constituted by a helical spring (8) mounted in a space of the mobile flange (1) coaxially around the axis of the corresponding screw (5), with one end of the spring being rotatively coupled to the screws and the other being frictionally applied to a surface of the clamping claw, which surface surrounds concentrically the axis of the screw (5).

3. A connection according to claim 2, characterized in that said surface is disposed orthogonally to the axis of the screw (5) and is provided with radial grooves (16), on which the corresponding end of the spring (8) slides during a relative movement between the screw (5) and the clamping claw (4).

4. A connection according to claim 1, characterized in that said coupling means is a soft torus joint (9) disposed within a toroidal groove (17) of the screw and frictionally engaging a toroidal groove in the clamping claw (4), with both grooves facing each other (Fig. 2).

5. A connection according to one of claims 1 to 4, characterized in that the stops are removable.

Fig. 1

Fig. 2

Fig. 3